# EUROPEAN PATENT SPECIFICATION

(11) **EP 1 954 116 B1**
(45) Date of publication and mention of the grant of the patent: **20.11.2013**
(21) Application number: 06790070.4
(22) Date of filing: 28.08.2006
(51) Int. Cl.: A01B 43/00, E01H 12/00

(54) **TINE RAKING DEVICE**
ZINKENRECHENVORRICHTUNG
DISPOSITIF DE RACLAGE DOTE DE DENTS

(30) Priority: 30.11.2005 US 290738
(43) Date of publication of application: 13.08.2008
(73) Proprietor: H. Barber & Sons, Inc., Naugatuck, Connecticut 06770-2223 (US)
(72) Inventor: BARBER, John, H., Huntington, Connecticut 06484 (US); BARBER, James, P., Goshen, Connecticut 06756 (US)
(74) Representative: Schaumburg, Thoenes, Thurn, Landskron, Eckert
(86) International application number: PCT/US2006/033714
(87) International publication number: WO 2007/064378

(56) References cited:
- FR-A- 2 562 577
- US-A- 2 499 615
- US-A- 3 362 480
- US-A- 3 765 159
- US-A- 4 482 019
- US-A- 5 220 965
- US-A1- 2005 188 667
- US-A1- 2005 189 273

## Description

### FIELD OF THE INVENTION

This invention relates generally to the separation of unwanted debris from soil or the like, and more particularly relates to a an improved device for cleaning sand bathing beaches or sand-like tracts of unwanted refuse, litter and other types of debris.

### BACKGROUND OF THE INVENTION

The littering propensities of the general public at beaches and other sandy recreation areas appears to be unlimited as to both the quantity and character of the refuse and litter involved and, also, wholly uncontrollable from any practical standpoint. The unavoidable accumulation of such refuse or debris, when coupled with the accumulation of naturally originating debris such as sea grasses, oversized shells, marine residues, and other and varied water deposited material, has created ever increasing problems for those responsible for the maintenance of cleanliness at such locations. The continually increasing magnitude of such problem with the attendant economic aspects of the continually increasing cost of effecting such debris removal has resulted in a demand for mechanized beach cleaning apparatus and numerous expedients have been advanced by the art as proposed solutions to the problem. Most of such expedients operate in such manner as to initially skim or otherwise physically separate a predetermined depth of sand from the surface thereof, then screen or otherwise mechanically separate such sand from the debris contained therein and then subsequently return the screened sand to the beach surface and convey the separated debris to a receptacle for ultimate disposition.

The operational capability and efficiency of apparatus incorporating such mode of operation is, however, inherently limited by the rate at which the screening or other mechanical sand-debris separation step can be effected. Such separation rate is determined, at least in part, by the nature and minimum size of debris whose separation is to be effected, the available area for effecting such separation and by the character and moisture content of the sand being cleaned. However, even with dry sand and under the most favorable operating conditions, the rate of sand-debris separation is normally so severely limited for any reasonably sized apparatus as to so circumscribe the permitted rate of unit advance and consequent operational capability to such a point as to render economically feasible use thereof doubtful at best. Moreover, the rate of sand-debris separation markedly decreases in accord with the moisture condition of the sand and most of such conventionally constructed units approach complete inoperability, from any practical standpoint, when high moisture content sand is to be cleaned.

Current technology removes some residual sand along with the debris. Removing this residual sand from the beach is an environmentally unsound practice. Such residual sand removal increases the time required to clean a beach as dump cycles are increased. Increased material removed from the beach results in increased disposal costs.

For example, U.S. Patent Application No. 2005/189273 to Geraghty is generally directed to a machine for removing articles deposited on the ground. The Geraghty machine comprises a wheel unit with a support frame mounted thereon with means for advancing the machine along a tract of the ground. An endless conveyor is mounted on the support frame and includes a plurality of tine assemblies, each with tines projecting from an outer side of the conveyor belt. A receptacle is also mounted on the support frame to receive articles collected by the tines. The tine assemblies each include a base strip and a retainer strip secured to the conveyor belt, and a plurality of tines secured between such strips, spaced along such strips, and having free end portions projecting substantially perpendicularly from the conveyor belt. The strips and the base coils of the tines project outwardly from the belt surface to form an impediment to the flow of debris and sand between adjacent tines along a tine assembly. In particular, this impediment blocks the downward flow of some debris and thereby eliminates the possibility of dislodging sand from the blocked debris as the conveyor belt is moving the debris to the collection receptacle.

Current technology is limited in the depth of cleaning and quality of cleaning. If tine penetration is increased the amount of sand and smaller debris removed is increased. It is desirable to keep the smaller debris but not the sand - which cannot be done with the current technology.

Current technology requires a change in cleaning depth by the adjusting of the moldboard to maximize cleaning efficiency under different conditions. When tines penetrate more deeply into the sand the distance the material at the surface of the sand needs to be elevated to reach the elevating portion of the conveyor is reduced. This reduced elevating distance will allow for a reduction on conveyor speed required to clean thus extending machine component life.

Accordingly, it is a general object of the present invention to overcome the drawbacks and disadvantages of prior soil cleaning devices.

### SUMMARY OF THE INVENTION

The object of the invention is achieved by a tine raking device according to claim 1.

The present invention embodies a perforated conveyor mechanism. The perforations allow residual sand removed with the debris to be further separated during the debris transfer up the elevating travel of the conveyor belt so as to allow the sand and small soil-like material to be returned to the ground. The outer surface of the conveyor belt does not include cross bars conventionally used for securing tines to the conveyor belt. Cross bars on the outer surface of the conveyor belt are part of the current technology and are eliminated herein to allow the free flow of debris between tines and down the conveyor. Moreover, the base of the tines including a coil or other flexible section is recessed relative to the outer surface of the conveyor belt to further facilitate the flow of debris down the elevating portion of the conveyor.

The separation process is further enhanced as debris being elevated passes between sets of tines- unimpeded by the absence of cross members otherwise conventionally disposed on the outer surface of the conveyor belt - and impacts on the following offset tine. Lumps are comminuted during the impact which renders a subsequent separation of debris and sand easier. The impact with the following tine further dislodges sand from the debris being elevated allowing it to pass through perforations and be returned to the ground. This pinball action repeatedly impacts the debris being removed quantitatively reducing the amount of sand adhering to the debris and reducing substantially the amount of sand transferred to the debris receptacle or hopper.

Performance is further enhanced in that the tine penetration into the sand or soil-like material may be increased. When this is done with the current technology the amount of sand and small debris picked-up is increased resulting in the unnecessary removal of sand. The perforations in the conveyor belt and the pinball action of the material as it is displaced to the material hopper now allow for some sand and small material to be removed because further separation will occur and the sand will be returned to the ground. The small debris which would not normally be removed with the existing technology can now be separated and elevated to the hopper. The result of the increased depth of cleaning is a cleaner beach. The beach has been cleaned to a greater depth and more small debris has been removed leaving more pure sand.

The increased distance the tines extend below the moldboard allows for less operator involvement in adjusting the machine to the conditions of the beach. A less qualified operator will now be able to operate the machine. The operator will be subject to less fatigue and potential injury due to a reduction in repetitive motion.

This cleaning of the beach by raking and sifting techniques is accomplished with one conveyor mechanism and a single power source. This simple design allows for economies of manufacture and minimized repair costs.

Increasing the height of the moldboard relative to the tines removes the board from an area of potential trauma. Large rocks, logs, jetties, etc. can damage the moldboard and connected frame when impacted. The farther the moldboard is elevated from the working surface the less likely it is to be damaged.

Increasing the height of the moldboard relative to the tines reduces the volume of material which must be carried in front of the board to level the beach. This in turn reduces the force required to level the beach. A smaller towing unit with less horse power is required resulting in increased fuel economy and a reduction in the cost of the towing unit.

### BRIEF DESCRIPTION OF THE DRAWINGS

FIG. 1 is a top plan view of a tine raking device embodying the present invention.

FIG. 2 is a side elevational view of the tine raking device of FIG.

FIG. 3 is a rear elevational view of the tine raking device of FIG. 1.

FIG. 4 is an enlarged plan view of a tine and its mounting in accordance with the present invention.

FIG. 5 is a cross-sectional, side elevational view of a tine and its mounting taken along the line 5-5 of FIG. 4.

FIG. 6 is a side elevational view of a debris deflection shield in accordance with the present invention.

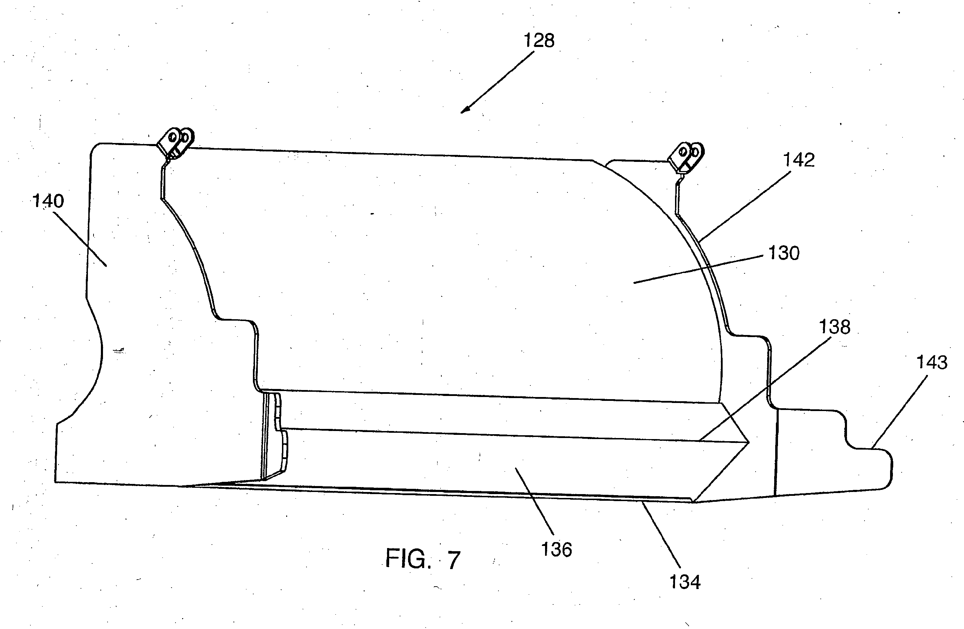

FIG. 7 is a perspective view of the debris shield of FIG. 6.

### DETAILED DESCRIPTION OF THE PREFERRED EMBODIMENT

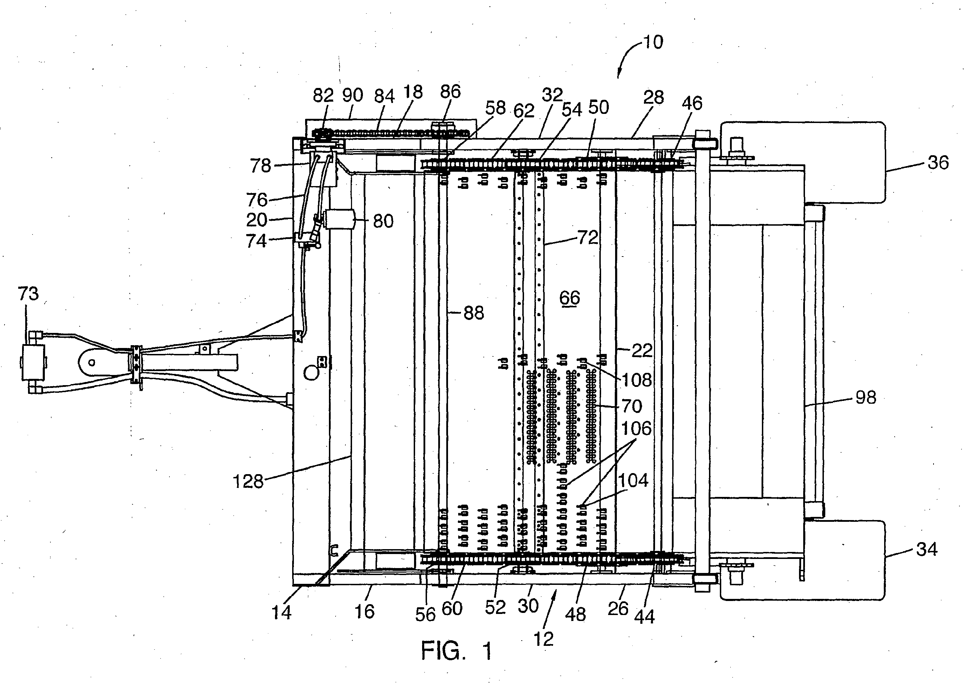

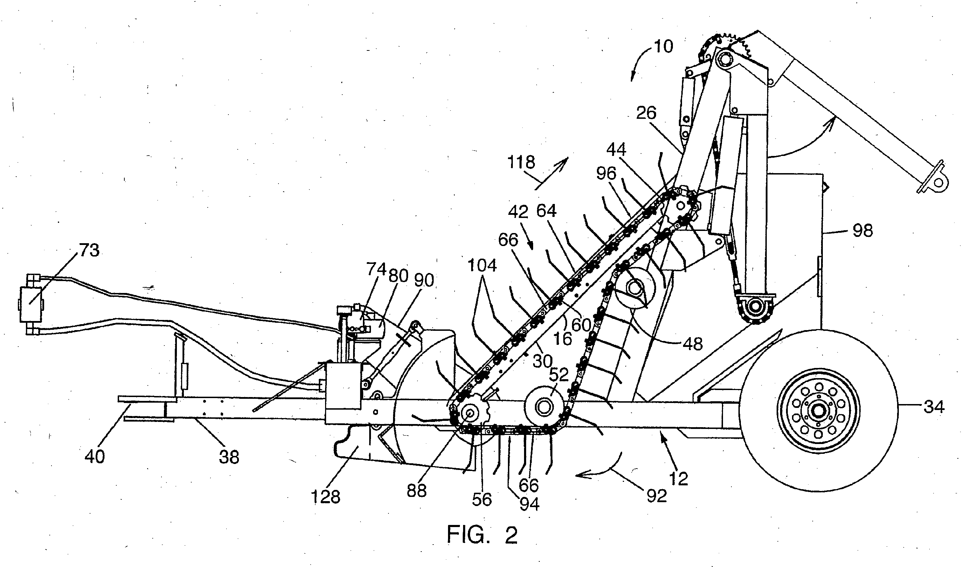

With reference to FIG. 1 and 2, a tine raking device embodying the present invention is generally indicated by the reference number 10. The device 10 includes a generally rectangularly shaped, perimetric base frame 12 suitably formed of beam members generally designated 14 such as angle, channel iron or tubing. The frame 12 has a pair of spaced side frame members 16 and 18 that are terminally bridged by front and rear frame members 20 and 22 respectively. A pair of generally triangularly shaped conveyor frame assemblies formed of rectangular tubing are mounted upon a rear half of the side frame members 16 and 18 and extend upwardly therefrom. The conveyor frame assemblies include an upwardly or generally vertically disposed conveyor frame members 26 and 28 mounted at a rear of each of the side frame members 16, 18. The conveyor frame assemblies also include generally angularly disposed brace members 30 and 32 respectively coupled at one end to the conveyor frame members 26 and 28, and respectively coupled at another end to the side frame members 16,18 in the vicinity of the midpoint thereof.

The frame 12 is terminally supported at a rear or trailing end by a pair of pneumatic tired wheels 34, 36 of suitable size to support the frame 12 in predetermined spaced relation to a sand beach or other surface to be cleaned.

A beam or draw bar serving as a towing unit 38 is secured to and extends forwardly of the front frame member 20. The towing unit 38 has a connector 40 such as an eye or hole at a terminal end thereof for coupling the device 10 to a vehicle such as a tractor to effect the advance of the device 10 relative to a sand beach or other surface to be cleaned.

The frame 12 supports an independently displaceable tine supporting conveyor belt assembly 42 having a path of travel in the general configuration of a scalene triangle. Included in the conveyor belt assembly 42 and defining the terminal points of a specified path of travel are a pair of first idler sprockets 44, 46 mounted at an apex of the conveyor frame assemblies, a pair of first idler rollers 48, 50 mounted on the conveyor frame members 26, 28 of the conveyor frame assemblies, a pair of second idler rollers 52, 54 positioned on the side frame members 16, 18, and a pair of drive sprockets 56, 58 mounted on the side frame members 16, 18. The respective pairs of the first idler sprockets 44, 46, the first idler rollers 48, 50, the second idler rollers 52, 54, and the drive sprockets 56, 58 are operatively interconnected by multi-link chain members 60, 62 which form a supporting component for a bar flight conveyor 64 covered with a conveyor belt 66 including a laminated rubber belting or mesh screen material. The conveyor belt 66 defines a plurality of perforations 70 sized to pass granules of sand therethrough and to prohibit the passage of debris to be removed from the surface being cleaned as explained more fully below. By way of example only, the perforations can range from about 3/8 inch to about 1 inch in length or diameter depending on the average size of the grains of sand on a particular beach. However, it should be understood that the size of the perforations can be smaller or larger than the above-identified range without departing from the scope of the present invention. An inner surface of the conveyor belt 66 includes a plurality of uniformly spaced channel shaped cross bars or beams 72 each terminally secured to outside links of the chain members 60, 62 which serve to support and provide a base connection for the rubber surfaced, laminated and perforated conveyor belt 66. There are no cross bars on an outer surface of the conveyor belt 66 as is typically found in prior conveyors for reasons to be explained more fully below.

The displacement of the conveyor belt 66 of the conveyor 64 over the path of travel defined by the pair of first idler sprockets 44, 46, the pair of first idler rollers 48, 50, the pair of second idler rollers 52, 54, and the pair of drive sprockets 56, 58 relative to the frame 12 is conveniently effected by transferring power hydraulically from a towing unit or vehicle to the drive sprockets. A hydraulic pump 73 is mounted to a spline shaft at the back of the towing unit 38. Hydraulic power is delivered to a flow control valve 74, with overflow projection, which is mounted on the frame 12. Power is then transferred by a hose 76 to a hydraulic drive motor 78 mounted on the front frame member 20. Oil then passes through a hydraulic filter 80 to the front frame member 20 which also serves as a hydraulic reservoir. The hydraulic drive motor 78 has a sprocket 82 mounted on an end thereof which is in turn connected through an auxiliary drive chain 84 to a sprocket 86. The sprocket 86 is drivingly mounted on a common shaft 88 with the drive sprockets 56, 58 for the chain members 60, 62. Because of their disposition exteriorly of the perimetric frame 12, the sprockets 82, 86 and the auxiliary drive chain 84 are preferably covered by a suitable guard member 90.

As will be apparent to those skilled in the pertinent art, operation of the above-described components forming a drive system effects displacement of the conveyor 64 in the clockwise direction as indicated by the directional arrow 92 along a path in the general configuration of a scalene triangle. Such path includes a base leg portion 94, disposed intermediate of the pair of second idler rollers 52, 54 and the drive sprockets 56,58, that is substantially parallel to the base frame 12 and of limited length and, after an abrupt change of direction during passage over the drive sprockets 56, 58, an inclined conveyor leg portion 96 that terminates at an elevated location above the mouth of a debris receiving hopper 98.

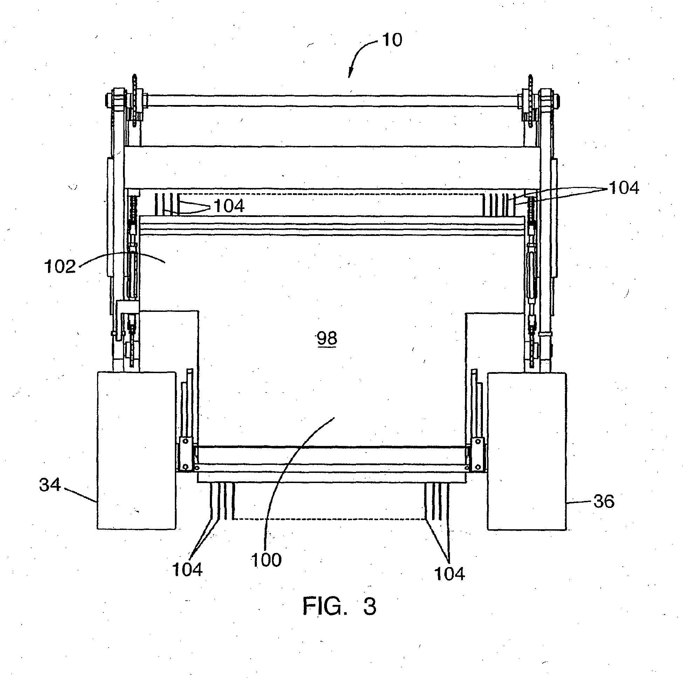

As shown in FIGS. 1-3, the hopper 98 is mounted on a rear of the base frame 12 and is preferably shaped so as to have a lower portion 100 sized to be disposed between the wheels 34, 36 and with an upper portion 102 of increased transverse extent so as to overhang the wheels to provide for maximum debris containing capacity thereof.

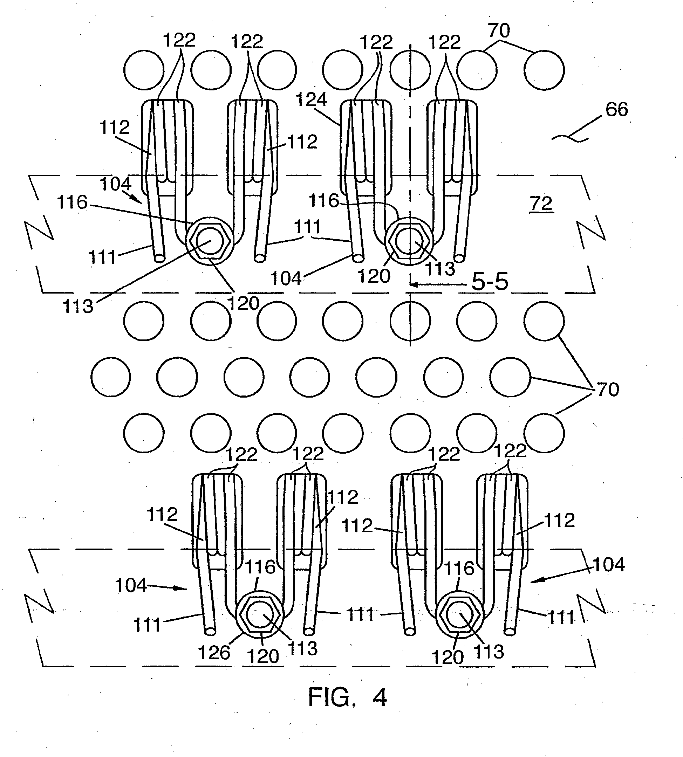

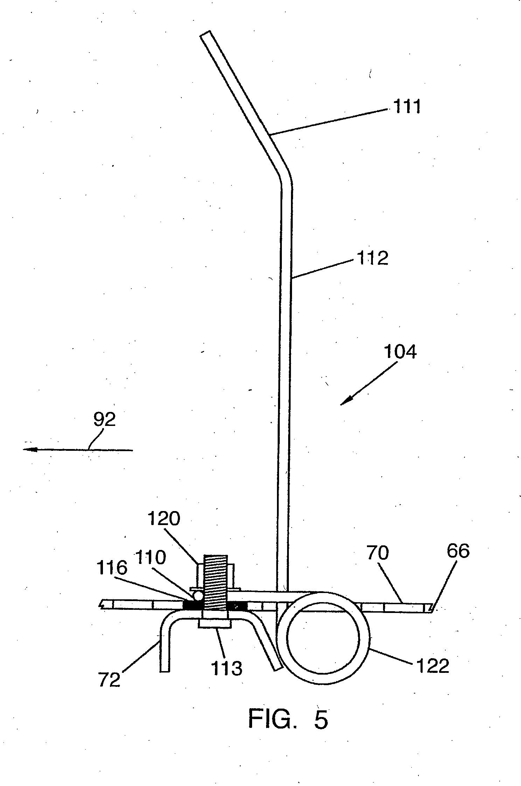

A plurality of spring-like or flexible tines 104 are mounted within the conveyor belt 66. The tines 104 are preferably arranged in spaced rows 106 transverse to the direction of conveyor advance and with the individual tines 104 in each row being disposed in staggered or offset relationship from the tines in the rows immediately preceding and following the same as illustrated at 108. As best shown in FIGS. 4 and 5, each of the spring-like tines 104 is preferably made of spring steel or like material with a flexible section such as a coil section 122 including a base portion 110 with two parallel legs 112 extending vertically from the base. The parallel legs 112 each have a body portion and an end portion 111 angularly disposed or offset relative to the body portion in a direction of travel of the tines.

As best shown in FIG. 5, the base portion 110 of each of the tines 104 is formed to accept a stud 113 or other securing mechanism to mount the base portion 110 of an associated tine 104 to a cross bar 72 of the conveyor belt 66 with a washer 116 and the conveyor belt 66 disposed therebetween. The mounting of each spring-like tine 104 on the conveyor belt 66 is readily effected by disposition of the base portion 110 of an associated tine in overflying relationship with a washer 116 and the cross bars 72 of the conveyor 64. More specifically, the base portion 110 of each of the tines 104 is positioned so as to dispose the end portions 111 in the direction of conveyor belt advance as indicated by the directional arrow 118. When each of the tines 104 is so located in a given row 106, each of the tines is secured in position by means of a locking nut 120 over the base portion 110 thereof and secured to underlying cross bars 72 of the conveyor 64. A stud 113 located internally in the cross bar 72 passes through the conveyor belt 66 and an associated washer 116, and then through the associated tine 104 and secured above by a locking nut 120 with a flanged base. The conveyor belt 66 and a washer 116 are thus secured in place between the associated tine 104 and the cross bar 72. Each of the tines 104 is held in correct orientation relative to the cross bar 72 by positioning of coil section 122 or other flexible section of an associated tine 104 immediately adjacent to the cross bar.

As best shown in FIG. 4, the conveyor belt 66 is made of laminated rubber covered perforated belting material or screen mesh defining perforations 70 of a size and shape to effectively allow the passage of sand and other small particulate material. The perforations 70 are in staggered rows 106 so that perforations in one row are lineally offset from the perforations in the immediately preceding row. No perforations 70 are positioned over the cross bars 72. Additional perforations 124 each of a size to accommodate a coil section 122 or other flexible section of a tine 104 in a recessed position relative to the outer surface of the conveyor belt 66 are defined by the conveyor belt 66 in rows parallel with the cross bars 72 to match the staggered tine configuration. Additional perforations 126 are defined by the conveyor belt 66 to accommodate the studs 113.

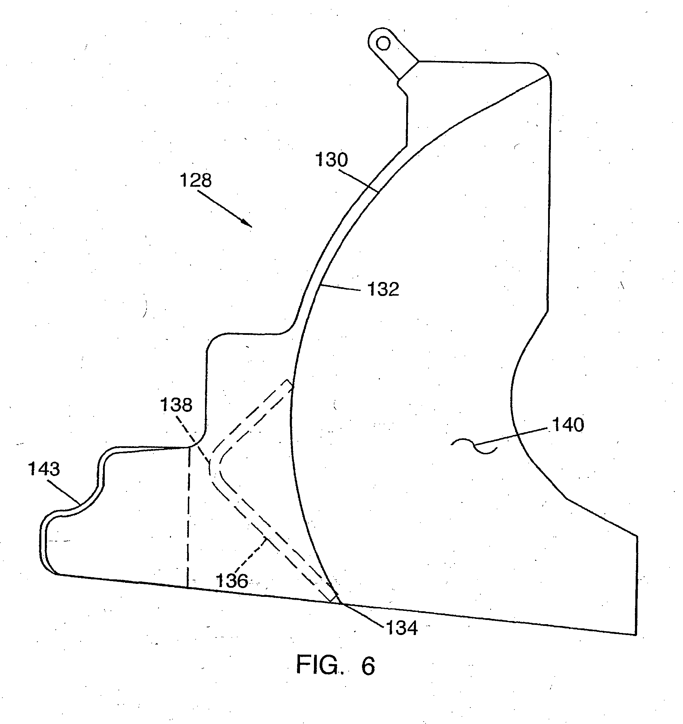

The device 10 further includes a debris deflection shield-moldboard assembly 128. The moldboard assembly 128 is disposed between the side frame members 16, 18 in front of the drive sprockets 56, 58 and extending across the transverse extent of the conveyor belt assembly 42. The moldboard assembly 128 includes an elongate debris deflection panel 130 extending across a full width of the conveyor belt 66. The debris deflection panel 130 is of a generally rectangular perimetric configuration and is selectively shaped in cross-section, as shown in FIG. 6, to provide a generally concentric radius shaped portion 132. Extending forwardly from a lower transverse marginal edge 134 of the deflection panel 130 is a planar skid member 136 extending across a full width of the deflection panel 130 and being disposed at an angle to the horizontal so as to elevate a forward or leading marginal edge 138 thereof. Disposed at either end of the deflection panel 130 are steel plate members or side plates 140,142 that extend over the full height of the deflection panel 130 and rearwardly thereof to contain debris displaced by the tines 104 within the transverse extent of the conveyor belt 66. A leading section 143 of the side plates 140, 142 are canted outwardly to deflect surface debris disposed outside of the path of tine travel to within the path of the tines 104.

The skid member 136 cooperatively functions to increase cleaning efficiency in that the skid member 136 both levels the sand surface to be cleaned before cleaning occurs by knocking down high areas and filling in low areas and operates to funnel debris into position and therefore render the same more susceptible to deflection through elastic reformation of the tines 104 as the tines start their displacement around the drive sprockets 56, 58. The leveling action prior to the extraction of debris ensures a consistent cleaning depth.

The elevated leading marginal edge 138 of the planar skid member 136 is sufficiently raised above the plane of the working area to place the skid member above particularly large objects which could, if struck directly, cause structural damage. The angled planar surface of the skid member 136 effectively rides over large objects if encountered so as to render them harmless to the structural integrity of the device 10.

Operation of the device 10 in a cleaning operation on a sand beach, for example, is effected by connecting the draw bar or towing unit 38 to a tractor or the like. During forward movement of the device 10, the skid member 136 levels the sand and also funnels material into the cleaning path of the tines 104.

In operation, the device 10 is moved in a forward direction by a vehicle such as a tractor. The depth of tine penetration is pre-set by the relative positions of the moldboard assembly 128 to the tines 104. The conveyor belt 66 with the tines 104 mounted thereon is independently advanced relative to the frame 12 and in the direction indicated by the arrows 92. The direction of such independent advance of the tines 104 through the sand to be cleaned is in the same direction as that of the frame 12 of the device 10. The effect of the above-mentioned movements of the frame 12 and the tines 104 is the sequential passage of the rows 106 of the spring-like tines 104 through the sand to be cleaned and an accumulation of litter, refuse or other debris disposed in the path of tine advance at a forward end of the conveyor belt assembly 42.

As the conveyor belt 66 passes over the drive sprockets 56, 58, the direction of movement of the tines 104 is abruptly changed and the speed of the end portions 111 thereof is increased. Such change in direction and rate of displacement results in a bending deformation of the tines 104 against the inherent resistance of the associated coil section 122 or other flexible section and the base portion 110 thereof. Such deformation progressively increases during change of direction and is abruptly released as the tines 104 lift away from the sand surface. Such release of the stored kinetic energy effects a reformation of the tines 104 and in a consequent displacement of any debris in their path upwardly and out of the sand. The debris displaced from the sand is either lifted directly by the tines 104 or is deflected off of the deflection panel 130 onto an inclined portion of the conveyor belt 66 disposed between the drive sprockets 56, 58 and the first idler sprockets 44, 46. Most, if not all, of the sand deflected by the snap action of the tines 104 and by the displaced debris will return to the beach surface through a passage between the deflection panel 130 and the forward end of the conveyor belt 66. The debris along with some sand will then start to travel up on the conveyor belt 66 in the direction shown by the arrow 92.

The elimination of cross bars on the outer surface of the conveyor belt 66 permits the outer surface of the conveyor belt 66 and the tines 104 to define a generally unimpeded path along the outer surface of the conveyor belt for debris to flow between adjacent tines along an associated row. Moreover, the coil section 122 or other flexible section of each of the tines 104 is recessed relative to the outer surface of the conveyor belt 66 to further define the generally unimpeded path for reasons which will now be explained.

Some particularly large material will travel directly up on the conveyor belt 66. Most of the moderate and smaller sized material will progress up on the conveyor belt 66 at a reduced rate relative to the rate of conveyor belt travel. The reduced rate of travel up on the conveyor belt 66 of the debris is due to the force exerted on the debris by gravity, the relatively smaller size of the debris as compared to the spacing between the tines 104 along a row 106, and the relatively steep upward angle of travel of the conveyor belt 66. This debris will be bypassed by a row 106 of tines 104 as the debris passes along a generally unimpeded path between the individual tine 104 (more specifically, between the tine legs 112) along a row and over the perforations 70 of the conveyor belt 66 until the debris is struck by one of the tines 104 in the following offset row. This impact serves two purposes. It will continue to project the debris in a path generally conforming to the path of travel of the conveyor belt 66 while frequently being displaced laterally relative to the direction of travel of the conveyor belt. The impact will also tend to dislodge any residual sand adhering to the debris.

This "pinball" action of the debris as it progresses up on the conveyor belt 66 is a repeated striking of the debris while the debris is in a variety of orientations to effectively dislodge from the debris any residual sand adhering thereto. The dislodged sand then passes through the perforations 70 of the conveyor belt 66 and back onto the beach. In other words, loose sand and small debris picked up by the tines 104 is selectively returned to the beach area. The size of the material returned is directly related to the size of the perforations 70 on the conveyor belt 66. The deflected debris moves with the continued upward displacement of the conveyor belt 66 and drops into the hopper 98 as the conveyor belt 66 is advanced past the first idler sprockets 44, 46. Such pinball action is not possible with conventional tine raking devices which employ cross members on the outer surface of the conveyor belt to secure the tines thereto. Such cross members on the outer surface of the conveyor belt impede or prevent the debris to pass between a row of tines and impact the adjacent staggered row of tines to thereby dislodge sand from the debris.

As will be recognized by those of ordinary skill in the pertinent art, numerous modifications and substitutions can be made to the above-described embodiment of the present invention without departing from the scope of the invention as defined in the accompanying claims. Accordingly, the preceding portion of this specification is to be taken in an illustrative, as opposed to a limiting sense.

## Claims

1. A tine raking device comprising:
a frame (12);
a conveyor assembly (42) supported on the frame (12), the conveyor assembly (42) having a conveyor belt (66) including a laminated rubber-type belting material defining a plurality of perforations (70) sized to allow passage therethrough of granules of sand and to prevent passage therethrough of larger sized debris to be removed from a ground surface; and
a plurality of flexible tines (104) extending outwardly from the conveyor belt (66), the tines (104) each including two generally parallel legs (112) spaced from one another and connected together by a coil section (122) and being arranged in rows (106) across a width of the conveyor belt (66), the rows (106) each being longitudinally spaced from adjacent rows (106) along the conveyor belt (66), and the tines (104) in each row (106) being disposed in staggered relationship along a width of the conveyor belt (66) relative to the tines (114) in the adjacent rows (106);
the conveyor assembly (42) further including:
a lower section (94) for permitting the tines (104) to contact and remove debris from a ground surface being cleaned; and
an inclined section (96) for lifting debris on the conveyor belt (66) in a direction away from the ground surface being cleaned; and **characterized by**:
an outer surface of the conveyor belt (66) between adjacent tines (104) along an associated row (106) such that an unimpeded path is defined along the outer surface of the conveyor belt (66) between adjacent tines (104) along an associated row (106) for debris to flow therebetween; and
further **characterized in that** the conveyor belt (66) defines a plurality of additional perforations (124), each to accommodate the coil section (122) of a tine (104) in a recessed position relative to the outer surface of the conveyor belt (66).

2. A tine raking device as defined in claim 1, further **characterized by** a hopper (98) disposed adjacent to an upwardmost portion of the inclined section (96) of the conveyor belt (66) for collecting the debris.

3. A tine raking device as defined in claim 1, further **characterized by** a moldboard assembly (128) coupled to a forward portion of the frame (12) for leveling the ground to be cleaned prior to removal of debris therefrom.

4. A tine raking device as defined in claim 1, further **characterized by** a deflection panel (130) coupled to the frame (12) forwardly of the lower section (94) of the conveyor assembly (42) for deflecting debris from the lower section (94) onto the inclined section (96) of the conveyor assembly (42).

5. A tine raking device as defined in claim 1, further **characterized by** a draw bar (38) attached to a forward portion (20) of the frame (12) for coupling the frame (12) to a towing vehicle.

6. A tine raking device as defined in claim 1, **characterized in that** the coil section (122) includes a base portion (110) for being coupled to the conveyor belt (66).

7. A tine raking device as defined in claim 1, **characterized in that** the tines (104) are made from spring steel.

8. A tine raking device as defined in claim 1, **characterized in that** the legs (112) of the tines (104) each include a body portion and an end portion (111), the end portion (111) being angularly offset relative to the body portion in a direction of travel of the tines (104).

9. A tine raking device as defined in claim 1, further **characterized by**:
a pump (73) to be powered by a vehicle; and
a motor (78) operatively coupled to the pump (73) for driving the conveyor assembly (42).

10. A tine raking device as defined in claim 9, **characterized in that** the pump (73) is a hydraulic pump.

11. A tine raking device as defined in claim 9, **characterized in that** the motor (78) is a hydraulic motor.

12. A tine raking device as defined in claim 1, further **characterized by** a plurality of cross bars (72) coupled to an inner surface of the conveyor belt (66) to support the conveyor belt (66).

## Patentansprüche

1. Zinkenrechenvorrichtung, umfassend:
einen Rahmen (12),
eine Förderanordnung (42), die von dem Rahmen (12) getragen wird, wobei die Förderanordnung (42) ein Förderband (66) aufweist, welches ein laminiertes gummiartiges Bandmaterial umfasst, das eine Vielzahl von Perforationen (70) begrenzt, die so bemessen sind, dass sie von Sandkörnern passiert werden können und ein Passieren von größerem Rechengut, das von einer Bodenfläche entfernt werden soll, verhindern; und
eine Vielzahl von biegsamen Zinken (104), die sich vom Förderband (66) aus nach außen erstrecken, wobei die Zinken (104) jeweils zwei im Wesentlichen parallele Arme (112) aufweisen, die zueinander beabstandet, durch einen Windungsabschnitt (122) miteinander verbunden und über die Breite des Förderbandes (66) hinweg in Reihen (106) angeordnet sind, wobei die Reihen (106) jeweils in Längsrichtung zu benachbarten Reihen (106) entlang des Förderbandes (66) beabstandet sind, und wobei die Zinken (104) in jeder Reihe (106) entlang der Breite des Förderbandes (66) in einer gestaffelten Beziehung relativ zu den Zinken (144) in den benachbarten Reihen (106) angeordnet sind;
wobei die Förderanordnung (42) zudem umfasst:
einen unteren Bereich (94), der es den Zinken (104) ermöglicht, mit Rechengut in Kontakt zu kommen und dieses von der zu reinigenden Bodenfläche zu entfernen; und
einen schrägen Abschnitt (96) zum Anheben von auf dem Förderband (66) befindlichem Rechengut in eine Richtung weg von der zu reinigenden Bodenfläche;
**gekennzeichnet durch**
eine Außenfläche des Förderbandes (66), die zwischen benachbarten Zinken (104) entlang einer zugehörigen Reihe (106) so vorgesehen ist, dass entlang der Außenfläche des Förderbandes (66) zwischen benachbarten Zinken (104) entlang einer zugehörigen Reihe (106) ein ungehinderter Pfad für ein Hindurchfließen von Rechengut zwischen diesen Zinken definiert wird; und
zudem **gekennzeichnet dadurch, dass** das Förderband (66) eine Vielzahl von zusätzlichen Perforationen (124) begrenzt, die jeweils den Windungsabschnitt (122) eines Zinken (104) in einer vertieften Position relativ zur Außenfläche des Förderbandes (66) aufnehmen.

2. Zinkenrechenvorrichtung nach Anspruch 1, zusätzlich **gekennzeichnet durch** einen Behälter (98) der zum Sammeln des Rechenguts nahe einem obersten Bereich des schrägen Abschnitts (96) des Förderbandes (66) angeordnet ist.

3. Zinkenrechenvorrichtung nach Anspruch 1, zusätzlich **gekennzeichnet durch** eine Abstreichblechanordnung (128), die an einem vorderen Bereich des Rahmens (12) zum Ebnen des zu reinigenden Bodens vor dem Entfernen von Rechengut vom Boden angekoppelt ist.

4. Zinkenrechenvorrichtung nach Anspruch 1, zusätzlich **gekennzeichnet durch** eine Ableitplatte (130), die mit dem Rahmen (12) in einer vorderen Position relativ zum unteren Abschnitt (94) der Förderanordnung (42) zum Ableiten von Rechengut von dem unteren Abschnitt (94) auf den schrägen Abschnitt (96) der Förderanordnung (42) gekoppelt ist.

5. Zinkenrechenvorrichtung nach Anspruch 1, zusätzlich **gekennzeichnet durch** einen Zugstab (38), der in einem vorderen Bereich (20) des Rahmens (12) zum Ankoppeln des Rahmens (12) an ein Zugfahrzeug angebracht ist.

6. Zinkenrechenvorrichtung nach Anspruch 1, **gekennzeichnet dadurch, dass** der Windungsabschnitt (122) einen Basisbereich (110) zur Befestigung an dem Förderband (66) umfasst.

7. Zinkenrechenvorrichtung nach Anspruch 1, **dadurch gekennzeichnet, dass** die Zinken (104) aus Federstahl hergestellt sind.

8. Zinkenrechenvorrichtung nach Anspruch 1, **dadurch gekennzeichnet, dass** die Arme (112) der Zinken (104) jeweils einen Körperbereich und einen Endbereich (111) aufweisen, wobei der Endbereich (111) in einem Winkel gegenüber dem Körperbereich in Bewegungsrichtung der Zinken (104) versetzt ist.

9. Zinkenrechenvorrichtung nach Anspruch 1, zusätzlich **gekennzeichnet durch**:
eine Pumpe (73), die **durch** ein Fahrzeug angetrieben wird; und
einen Motor (78), der mit der Pumpe (73) zum Antreiben der Förderanordnung (42) in Wirkverbindung steht.

10. Zinkenrechenvorrichtung nach Anspruch 9, **dadurch gekennzeichnet, dass** die Pumpe (73) eine Hydraulikpumpe ist.

11. Zinkenrechenvorrichtung nach Anspruch 9, **dadurch gekennzeichnet, dass** der Motor (78) ein Hydraulikmotor ist.

12. Zinkenrechenvorrichtung nach Anspruch 1, zusätzlich **gekennzeichnet durch** eine Vielzahl von Querstäben (72), die an einer Innenfläche des Förderbandes (66) zur Abstützung des Förderbandes (66) befestigt sind.

## Revendications

1. Dispositif de raclage doté de dents qui comprend :
- un châssis (12) ;
- un ensemble transporteur (42) monté sur le châssis (12), l'ensemble transporteur (42) possédant une bande transporteuse (66) incluant un matériau laminé pour courroie du type caoutchouc définissant une pluralité de perforations (70) dont la taille laisse passer les grains de sable et bloque le passage de débris de dimension plus importante que l'on retire de la surface du sol ; et
- une pluralité de dents souples (104) s'étendant vers l'extérieur à partir de la bande transporteuse (66), les dents (104) incluant, chacune, deux ailes (112) généralement parallèles espacées l'une de l'autre et reliées ensemble par une section de bobine (122) et étant agencées en rangées (106) sur toute la largeur de la bande transporteuse (66), les rangées (106) étant, chacune, espacées des rangées adjacentes (106) dans le sens de la longueur sur toute la bande transporteuse (66) et les dents (104) de chaque rangée (106) étant disposées en une relation en quinconce sur toute la largeur de la bande transporteuse (66) par rapport aux dents (114) des rangées adjacentes (106) ;
- l'ensemble transporteur (42) comportant en outre :
- une section inférieure (94) qui permet aux dents (104) de venir au contact des et de retirer les débris de la surface du sol à nettoyer ; et
- une section inclinée (96) qui permet de soulever les débris du sol à nettoyer et de les déposer sur la bande transporteuse (66) ; et **caractérisé par** :
- une surface externe de la bande transporteuse (66) entre des dents adjacentes (104) selon une rangée qui leur est associée (106) de manière à définir un passage généralement libre sur toute la surface externe de la bande transporteuse (66) en vue d'acheminer les débris entre des dents adjacentes (104) selon une rangée (106) qui leur est associée ; et
- **caractérisé en outre en ce que** la bande transporteuse (66) définit une pluralité de perforations (124) supplémentaires, chacune permettant de loger la section de bobine (122) d'une dent (104) dans une position encastrée par rapport à la surface externe de la bande transporteuse (66).

2. Dispositif de raclage doté de dents selon la revendication 1, **caractérisé en outre par** un porteur (98) disposé pour être adjacent à une partie la plus élevée de la section inclinée (96) de la bande transporteuse (66) afin de ramasser les débris.

3. Dispositif de raclage doté de dents selon la revendication 1, **caractérisé en outre par** un ensemble verseur (128) couplé à une partie avant du châssis (12) permettant de niveler le sol à nettoyer avant l'enlèvement des débris sur celui-ci.

4. Dispositif de raclage doté de dents selon la revendication 1, **caractérisé en outre par** un panneau déflecteur (130) couplé au châssis (12) en avant de la section inférieure (94) de l'ensemble transporteur (42) afin de dévier les débris depuis la section inférieure (94) vers la section inclinée (96) de l'ensemble transporteur (42).

5. Dispositif de raclage doté de dents selon la revendication 1, **caractérisé en outre par** une barre d'attelage (38) fixée sur une partie avant (20) du châssis (12) afin de coupler le châssis (12) à un véhicule de remorquage.

6. Dispositif de raclage doté de dents selon la revendication 1, **caractérisé en ce que** la section de bobine (122) inclut une partie de base (110) destinée à être couplée à la bande transporteuse (66).

7. Dispositif de raclage doté de dents selon la revendication 1, **caractérisé en ce que** les dents (104) sont en acier pour ressorts.

8. Dispositif de raclage doté de dents selon la revendication 1, **caractérisé en ce que** les ailes (112) des dents (104) incluent, chacune, une partie de corps et une partie d'extrémité (111), la partie d'extrémité (111) étant décalée suivant un angle par rapport à la partie de corps dans le sens du déplacement des dents (104).

9. Dispositif de raclage doté de dents selon la revendication 1, **caractérisé en outre par** :
- une pompe (73) alimentée par un véhicule ; et
- un moteur (78) couplé, pour fonctionner, à la pompe (73) afin d'entrainer l'ensemble transporteur (42).

10. Dispositif de raclage doté de dents selon la revendication 9, **caractérisé en ce que** la pompe (73) est une pompe hydraulique.

11. Dispositif de raclage doté de dents selon la revendication 9, **caractérisé en ce que** le moteur (78) est un moteur hydraulique.

12. Dispositif de raclage doté de dents selon la revendication 1, **caractérisé en outre par** une pluralité de traverses (72) couplées à une surface interne de la bande transporteuse (66) afin de supporter la bande transporteuse (66).
